(19) **Europäisches Patentamt / European Patent Office / Office européen des brevets**

(11) **EP 3 319 152 A1**

(12) # EUROPEAN PATENT APPLICATION
published in accordance with Art. 153(4) EPC

(43) Date of publication:
**09.05.2018 Bulletin 2018/19**

(21) Application number: **15896750.5**

(22) Date of filing: **30.06.2015**

(51) Int Cl.:
**H01M 4/48** (2010.01)

(86) International application number:
**PCT/CN2015/082830**

(87) International publication number:
**WO 2017/000219 (05.01.2017 Gazette 2017/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicants:
• **Zhang, Yuhong**
  **Suzhou, Jiangsu 215163 (CN)**

• **Nantong Volta Materials Ltd.**
  **Nantong, Jiangsu 226300 (CN)**

(72) Inventors:
• **Zhang, Yuhong**
  **Suzhou, Jiangsu 215163 (CN)**
• **Nantong Volta Materials Ltd.**
  **Nantong, Jiangsu 226300 (CN)**

(74) Representative: **Lambsdorff & Lange**
**Patentanwälte**
**Partnerschaft mbB**
**Grillparzerstraße 12A**
**81675 München (DE)**

(54) **DOPED CONDUCTIVE OXIDE AND IMPROVED ELECTROCHEMICAL ENERGY STORAGE DEVICE POLAR PLATE BASED ON SAME**

(57) The object of the present invention is to provide a class of novel highly conductive doped oxides and their use as an electrode plate additive for batteries. With tungsten oxide or molybdenum oxide as the precursor, the controllable metal doping leads to the formation of highly conductive oxide materials with high hydrogen evolution and high oxygen evolution potential, and can be stable in the sulfuric acid solution. This material can be used as additive materials for the battery positive and negative electrodes and can effectively reduce the electrode internal resistance, improve the utilization efficiency of active materials, increase charge and discharge rate performance, stabilize the electrode structure and improve cycling life.

Fig 16

EP 3 319 152 A1

**Description**

**Technical field**

The present invention relates to an application having a highly conductive doped oxide material and its application to an electrode of an electrochemical energy storage device.

**Technical background**

With the depletion of petroleum resources, environmental protection has becoming more and more important. Green energy-related industries will hold great promise as an alternative for petroleum resources. As an important medium for energy storage, batteries will play a decisive role. Their market will grow rapidly with the development of electric vehicles, electric bicycles (electric motorcycles), power tools, solar energy, wind energy and other new renewable energy, as well as power storage, distributed micro-grid and other industries. In order to meet the new market demand, many institutions over the world have invested heavily in the research and development of new energy storage technologies, especially research and development of new energy storage materials.

At present, the most common electrochemical energy storage devices are lead-acid batteries, nickel-cadmium batteries, nickel-metal hydride batteries, lithium-ion batteries, fuel cells and electrochemical capacitors. By considering environmental effect (for example, high toxicity of cadmium in nickel-cadmium batteries), cycle life (short lead-acid battery life), cost (high price of rare earth metals), and reliability and safety (for example, safety of lithium-ion battery is poor because their electrolytes are based on organic solvents), the current secondary batteries are neither suitable for electric vehicles as their power supply and nor for large-scale energy storage areas. Compared to batteries, supercapacitors can provide higher power density and ultra-long cycle life, but the energy density of such devices is too low to be suitable for large-scale energy storage. Therefore, the development of safe and low cost electrochemical energy storage devices with high power density, high energy density and long cycle life becomes urgently demanded.

In aqueous electrolyte based energy storage system systems, most of the conductive oxides are only stable in some neutral or alkaline electrolytes but unstable in acid electrolytes. Very few oxides, such as $RuO_2$, $MnO_2$, $MoO_3$, and $WO_3$ can be stably present in acidic electrolytes. Lead acid batteries and fuel cells based on acid electrolyte systems are of particular commercial value due to their high reliability, low cost and relatively high energy density. So far, lots of research has been devoted to improving the performance of lead-acid batteries and fuel cells, such as to create better electrodes by controlling the compositions and structures. Particularly, in recent years people have been using porous carbon materials to replace the entire or partial of negative electrode material (lead) in the traditional lead acid batteries (CN101563741B, US7998616B2, CN200910183503, KR1020060084441A), which can effectively suppresses the sulfation of the negative electrode in the incomplete charging state, resulting in a significant increase in power and cycle life of the lead acid battery, but these methods reduce the energy density of lead-acid batteries. Patent WO2015054974A1 discloses a hybrid supercapacitor based on a tungsten oxide negative electrode having an energy density close to that of a conventional lead-acid battery but a greatly improved cycle life. This material can replace all or part of the anode in a traditional lead-acid battery. However, the overpotential of hydrogen evolution from this tungsten oxide is only slightly higher than the lead negative (~50 mV), which to some extent limits the working potential of the battery, capacity and cycle performance. Although these strategies have effectively improved the performance of certain aspects of lead-acid batteries, in general, so far, manufacturing lead acid batteries with sufficiently high power and long enough cycle life (100% DOD cycles> 1000 times), is still limited by the activity and stability of the positive and negative electrode materials, including: 1) positive (lead dioxide) active material utilization is low and the resulting positive softening, thermal runaway and water loss; 2) negative active material (lead) suffers from poor high current acceptance capability, sulfation, low cycle life and too much hydrogen evolution.

Generally, the utilization rate of the positive electrode active material of lead-acid battery is about 38%, which is mainly due to the formation of dense insulating $PbSO_4$ after discharge of $PbO_2$, which causes the pores inside the plate to block and prevent the electrolyte diffusion from the surface to the inside, and the lead oxide isolated by the $PbSO_4$ cannot participate in the reaction, leading to reduced battery capacity. Facing these challenges, the main solution is to increase the porosity of the positive electrode active material, or by using a porous material and a conductive additive for the formulation of positive electrode to increase the capacity and to effectively suppress the softening of the positive electrode. Wherein the porosity and the apparent density of the positive electrode material can be changed by adjusting the ratio of sulfuric acid and water in the positive electrode formulation process, and the utilization ratio of the active material of the positive electrode can be improved by adding a porous material (having a high specific surface area) and a conductive agent as an additive. However, considering that the lead dioxide material has a relatively complex structure and is very sensitive to foreign additives, even a small amount of additive will lead to softening or passivation of the active material. Therefore, the type of additives for the positive electrode active material is very limited, and their working mechanism is also unclear.

Based on the criteria of choosing positive additives, in order to improve the efficiency of the positive electrode, it is necessary to improve the formation efficiency of the positive electrode. The formation of the positive electrode of the lead-acid battery is longer than that of the negative electrode, which is due to the insulating properties of the positive electrode paste during curing. In the process of chemical formation, the oxidation of lead ($Pb^{2+}$) compounds in the lead dioxide paste need to undergo a series of chemical reactions, and some of the reaction process slowly hindered the formation process of the positive plate. In order to speed up this process, the positive additive should have electrochemical conductivity and is extremely stable in sulfuric acid. This additive provides an electrochemical conductive network in the lead paste and is subjected to an oxidation reaction simultaneously in a wide range of lead paste volumes. Second, the additive should effectively improve the positive capacity, energy and power output, and should extend the cycle life, which requires a uniform distribution of electrolyte.

Currently, there are two types of positive additives that can meet the above requirements:

1) Additives having a porous property (high specific surface area)

The porous materials added to the positive electrode can utilize their own properties, for example, mineral additives $SiO_2$, $Al_2O_3$, $K_2O$, $Na_2O$, $Fe_2O_3$, CaO and MgO etc. (L. Zerroual et al, J. Power Sources. 2015, 279 146-150) to accelerate the diffusion of the electrolyte and to increase the utilization of the positive electrode active material. This will increase the concentration of $[Pb(OH)_4]$ aggregates, filling all voids in the reaction zone, so that the newly formed aggregates in the active material can be uniformly distributed. The structure of the active substance is also uniform. In addition, the dehydration rate is accelerated and the generated water is too far away from the above aggregates, which results in a large number of micropores, thus ensuring that the plate has high capacity and fast reaction kinetics. Although the porous material contributes to the distribution of the electrolyte in the active material, it is not possible to solve the problem of softening and side reaction due to the poor conductivity of the material itself.

(2) Additives having electronic conductivity

Generally, the fibers and the powder particles can be brought into contact with each other or with the conductive $PbO_2$ to increase the current density inside the electrode plate, thereby increasing the surface area of the formation reaction. However, the content of this type of conductive agent is limited to no more than 2wt.%. For example, although the ceramic $BaPbO_3$ provides conductive network to accelerate formation process, it is easily decomposed into sulfuric acid into $BaSO_4$ and $PbO_2$. And once the content of $BaSO_4$ in the positive electrode exceeds 0.3% by weight, it will shorten the life of the battery (US Patent No. 5 302476); high-conductivity $Ti_4O_7$ has high hydrogen evolution and oxygen evolution potentials and is stable in sulfuric acid, but it is highly expensive (K.R. Bullock, J. Power Source, 1994, 51, 1); the addition of various carbon materials as an additive into the positive electrode, whether it is activated carbon, carbon fiber, anisotropic graphite or graphite fiber, can effectively improve the efficiency of the formation process, but due to the voltage mismatch in the process, at least half of the carbon material will be oxidized to result in reduced conductivity. Therefore, in reality they only play a role in increasing the porosity of the positive electrode active material. At the same time, high content of carbon material will decrease the mechanical strength of the positive electrode plate, and makes the manufacturing process complicated (J. L. Weininger et al, J. Electrochem. Soc., 1975, 122, 1161); the most commonly used positive electrode additive for lead-acid battery plants, red lead ($Pb_3O_4$), still cannot solve the problems associated with positive softening at high current and shortened battery life.

Similarly, to enhance battery performance, various carbon materials are major conductive additives for lead-acid battery negative electrodes. Previous research shows that carbon materials can improve the conductivity of the plate, and it is beneficial to form the ion transport channels for the electrolyte. It can promote the transport and diffusion of sulfuric acid in the lead paste and reduce the overpotential for lead ion reduction to form lead (reduced by 300-400mV). It also reduces the activation energy of the deposition of lead by reduction of divalent lead ions and inhibiting the deposition of $PbSO_4$. However, the large difference in the properties of different types of carbon materials, such as specific surface area, conductivity, surface functional groups, abundance and embedded chemical properties, results in significantly different additive effect in negative electrodes, which indicates that electrical conductivity is not the only reason for battery performance improvement. Since the operation potential of lead-acid battery is wide, the introduction of too much high-surface-area carbon material into electrodes will exacerbate the occurrence of hydrogen evolution reaction and consume a large number of water in the electrolytes, resulting in deterioration of battery performance and cycle life. Compared with the traditional lead-acid batteries with energy density of about 35 ~ 40Wh/kg, the introduction of carbon in the electrode material as an active component will cause electrode voltage mismatch and low battery capacity (8-16Wh/kg). In addition, the high cost of carbon materials, high specific surface area, low hydrogen evolution potential have restricted the low-carbon content (<2wt.%) in the super-batteries and causes serious self-discharge issues. To sum up, people have not yet developed suitable lead-acid battery positive and negative additives, so that they can also provide high power density, high energy density and long enough life to meet requirements of various industrial applications.

Facing the above problems, we have designed and synthesized a highly conductive dopant oxide, which can be used as a new functional addition material for positive and negative electrodes in lead acid batteries. In patent WO2015054974A1 we have disclosed a special tungsten oxide (WO3) material. On the basis of this, by controlling the metal doping of the tungsten oxide material, it can become a more efficient electron conductor, and it is possible to maintain the stability of the structure and composition in the sulfuric acid solution and to have a composition that matches the oxygen potential at positive electrode of the lead acid battery, and hydrogen evolution potentials that match the negative electrode. In addition, other oxides with similar oxides, such as molybdenum oxide ($MoO_3$), can also be synthesized in the same manner and prepared with dopant to gain with the same acid resistance and high conductivity. When used as an additive in the positive or negative electrode of lead-acid batteries, such materials enable the batteries to achieve excellent energy, power and cycle performance.

**Summary of the Invention**

The object of the present invention is to provide a class of highly conductive doped oxides and their use as an electrode additive for an electrochemical energy storage device containing an acidic electrolyte. With tungsten oxide or molybdenum oxide as the precursor, the controllable metal doping leads to the formation of a highly conductive oxide material with high hydrogen evolution and high oxygen evolution potentials, and can be stable in the sulfuric acid solution. This material can be used as an additive for cathodes and anodes in lead-acid batteries or acid fuel cells which can effectively reduce the internal resistance of the electrodes, improve the utilization of active materials and rate capability, stabilize the electrode structure and improve the cycling life.

A part of the present invention is to provide an electrode for an electrochemical energy storage device containing an acidic electrolyte, such as a lead acid battery or a fuel cell using an acidic electrolyte, which includes one or more than one of the following oxides:

Tungsten oxide ($A_xWO_3$) doped with A element, and molybdenum oxide ($A_xMoO3$) doped with A element, wherein The dopant element A may be any one or more of the following:

Lithium, sodium, potassium, beryllium, magnesium, calcium, scandium, titanium, vanadium, chromium, manganese, iron, cobalt, nickel, copper, zinc, gallium, germanium, arsenic, rubidium, cesium, yttrium, zirconium, strontium, niobium, Molybdenum, tritium, rhenium, iridium, platinum, gold, mercury, mound, lead, bismuth. According to the basic principle of oxide doping, usually metal elements, oxides or precursor salts that can be stable at the temperature above 300 degrees can be used to produce doped tungsten oxide or doped molybdenum oxide. Thus, according to this principle, one or more of the above elements can be used as an introduction doping process. This method is also widely used in the field of semiconductors and metallurgy.

And wherein the range of x values (mole percent) is 0.15 to 1, preferably in the range of 0.5 to 1.

Wherein the oxide is in the form of powder, the particle size of the powder is 50 $\mu$m or less, more preferably the particle size is 20 $\mu$m or less, and most preferably is 5 $\mu$m or less.

And wherein the content of the oxide in the electrode plate is 0 to 20 wt%. It should be noted that, for the plate, especially the paste-type plate, the plate is in fact formed by the current collector and paste coated on the collector. However, since the type and quantity of the current collector are not the same, and it does not affect the final performance of the electrode plate, the term "the content of the oxide in the electrode plate" as used herein means "the amount of the oxide in the paste".

And wherein the positive plate further comprises lead dioxide when the plate is a positive plate, and the negative plate further comprises lead when the plate is a negative plate. For electrochemical cells, especially lead-acid batteries, the positive and negative electrodes contain lead dioxide and lead, respectively, which are the most basic principles and settings. Therefore, the technical staff in this field can easily determine the content of lead dioxide and lead in positive and negative plates, respectively, according to conventional technical means. And preferably, wherein the oxide is mixed with the lead dioxide or lead in such a manner that the oxide doped with element A designed by the present invention is mixed with lead or lead oxide to form a complex to make a paste-type electrode. Another possible way is to add the oxide to lead or lead oxide, respectively, to form a paste-type electrode. As previously stated, the oxides of the present invention are present in these pastes with an amount of from 0 to 20% by weight. At the same time, another alternative way is to add the oxide used in the present invention to an acidic electrolyte of a fuel cell with an amount of 0 to 20 wt%.

Another aspect of the present invention is to provide an electrochemical energy storage device containing an acidic electrolyte and a positive electrode and /or a negative electrode is/are selected from any of the plates given above.

And the acidic electrolyte may be selected from the group consisting of sulfuric acid, nitric acid, hydrochloric acid, phosphoric acid, acetic acid and oxalic acid.

Another aspect of the present invention is to provide a paste suitable for use in the preparation of an electrochemical energy storage device, such as a lead acid battery or an electrode plate of an acid fuel cell, comprising one or more than one of the following oxides:

Tungsten oxide ($A_xWO_3$) doped with A element, and molybdenum oxide ($A_xMoO_3$) doped with A element, wherein The dopant element A may be any one or more of the following:

Lithium, sodium, potassium, beryllium, magnesium, calcium, scandium, titanium, vanadium, chromium, manganese, iron, cobalt, nickel, copper, zinc, gallium, germanium, arsenic, rubidium, cesium, yttrium, zirconium, strontium, niobium, molybdenum, tritium, rhenium, iridium, platinum, gold, mercury, mound, lead, bismuth. According to the basic principle of oxide doping, usually metal elements, oxides or precursor salts that can be stable at the temperature above 300 degrees can be used to produce doped tungsten oxide or doped molybdenum oxide. Thus, according to this principle, one or more of the above elements can be used as an introduction doping process. This method is also widely used in the field of semiconductors and metallurgy.
And wherein the range of x values (mole percent) is 0.15 to 1, preferably in the range of 0.5 to 1.

Wherein the range of composition ratio of oxide in the paste of the invention is 0-20wt%.

Wherein the oxide is in the form of powder, the particle size of the powder is 50 $\mu$m or less, more preferably the particle size is 20 $\mu$m or less, and the particle size is more preferably 5 $\mu$m or less.

Another aspect of the present invention is to provide an application of an oxide in reducing the internal resistance of an electrochemical energy storage device, such as a lead acid battery or an acid fuel cell, selected from the group consisting of one or more than one of the following oxides:

Tungsten oxide ($A_xWO_3$) doped with A element, and molybdenum oxide ($A_xMoO_3$) doped with A element, wherein The dopant element A may be any one or more of the following:

Lithium, sodium, potassium, beryllium, magnesium, calcium, scandium, titanium, vanadium, chromium, manganese, iron, cobalt, nickel, copper, zinc, gallium, germanium, arsenic, rubidium, cesium, yttrium, zirconium, strontium, niobium, molybdenum, tritium, rhenium, iridium, platinum, gold, mercury, mound, lead, bismuth. According to the basic principle of oxide doping, usually metal elements, oxides or precursor salts that can be stable at the temperature above 300 degrees can be used to produce doped tungsten oxide or doped molybdenum oxide. Thus, according to this principle, one or more of the above elements can be used as an introduction doping process. This method is also widely used in the field of semiconductors and metallurgy.
And wherein the range of x values (mole percent) is 0.15 to 1, preferably in the range of 0.5 to 1.

The technical effect of the invention is that:

1) The materials synthesis process is simple. Industrial set-ups have been widely used in the synthesis of a large number of different chemical products; therefore it is easy to perform large-scale production;

2) The obtained doped oxide has a stable three-dimensional structure, which is beneficial to the formation of a good interface with the positive lead paste during the curing process. The structure of the material does not change during the operation process, suppresses the positive sulfation and provides stable conductive network, thus improving the cycle life;

3) The obtained doped oxide is favorable for the interface between the negative grid and the negative electrode paste to form a good interface during the curing process. The structure of the material does not change during the operation process, provides a stable conductive network and improves the cycle life of the electrode;

4) The obtained doped tungsten oxide has special morphological characteristics, which is beneficial to the rapid transport of ions, and has high conductivity, which can effectively reduce the internal resistance of the electrode (positive and negative), so as to realize high capacity, high discharge rate and high current charge/discharge performance;

5) The obtained doping tungsten oxide can be used to construct high efficiency positive electrode. The metal dopant element provides high oxygen evolution potential so as to match the positive electrode potential, reduce side reactions and slow down self-discharge rate;

6) The doping type tungsten oxide is mixed with the negative electrode material of lead acid battery, which can effectively improve the utilization rate of active material of lead acid battery and enhance the energy density of the battery;

7) Addition of doped tungsten oxide can be used construct high efficiency negative electrode. The metal dopant element provides high hydrogen evolution potential so as to match the negative electrode potential, reduce side reaction and slow down self-discharge rate;

8) The resulted electrodes provide excellent high and low temperature performance; effectively improve the conductivity of the active material and its porosity and is favorable for the diffusion of sulfuric acid solution. The capacity retention rate at the low temperature reaches about twice the conventional batteries. Plate corrosion and positive softening occurred at high temperature has been eased to extend the lifetime of batteries in a variety of extreme conditions.

9) The obtained new battery system simultaneously achieved low cost, high energy density, high rate performance, long life and high safety.

**Description of the drawings**

Figure 1. Electron micrograph of tin-doped tin oxide ($Sn_xWO_3$) with high conductivity, where x= 1;

Figure 2. Electron micrograph of lead-doped tungsten oxide ($Pb_xWO_3$) with high conductivity, where x = 0.5;

Figure 3. Electron micrograph of doped tungsten oxide ($Pb_xWO_3$) with high conductivity and microscopy-mapping graph showing Pb dopant is evenly distributed, where graph a) is the original photograph, b) is the Pb element distribution, c) is the O element distribution, d) is the W element distribution, and x = 0.5;

Figure 4. Schematic diagram shows the comparison of the AC impedance of the PbO, $Pb_{0.5}WO_3$ and $SnWO_3$ electrodes before and after linear scanning (0.5mV/s) of the tungsten oxide electrode and the PbO electrode, where a) is open circuit voltage impedance, b) is impedance after scanned to 2.0V vs Ag/AgCl);

Figure 5. Linear voltammetric curves of tungsten oxide ($Pb_xWO_3$) doped with different contents of lead and activated carbon electrode at a scanning speed of 0.5 mV / s, where x = 0.15, 0.3, 0.6;

Figure 6. The content of $PbO_2$ after mixing different content $Pb_xWO_3$ and the formation, where x = 0.5;

Figure 7. Cycle life curve of the positive plate made of the mixed $Pb_xWO_3$_3wt.% (dependence of discharge capacity and Coulomb efficiency on the number of cycles), where x= 0.5;

Figure 8. Rate performance of lead-acid positive electrode and mixed $Pb_xWO_3$ (~ 3wt.%)) electrodes at different discharge currents, where x = 0.5;

Figure 9. Scanning electron micrographs of the cross-section of the positive electrode plates of the lead-acid batteries and the $Pb_xWO_3$ (~ 1 wt.%) mixed positive electrodes after 10 cycles of cycling, where x = 0.5;

Figure 10. Linear sweep voltammetric curves of Pb-doped tungsten oxide ($Pb_xWO_3$) and PbO electrodes at a scanning speed of 0.5 mV/s, where x = 1;

Figure 11. Comparison of the curves for the formation of lead-acid negative electrode plates with different content (0,1wt%, 3wt%) $Pb_xWO_3$, where x = 1;

Figure 12. Schematic diagram of the initial discharge capacity at a 1C rate of the lead-acid negative electrode plate with different contents (0,1wt%, 3wt%) of $Pb_xWO_3$, where x = 1;

Figure 13. Schematic diagram of the rate performance (discharge capacity) of the 3 wt.% $Pb_xWO_3$ positive electrode at different discharge currents, where x = 1;

Figure 14. Comparison of the charging capacity of electrodes after 1C rate discharge, where a) is the test procedure, b) is the time-dependent curve of voltage and current of the lead-acid battery negative electrode; c) the time-dependent curve of voltage and current of lead-acid negative electrode mixed with 3 wt.% of $Pb_xWO_3$; d) charge current dependence with the time before and after mixing, where x = 1;

Figure 15. Discharge capacity and coulomb efficiency dependence on cycle numbers of lead-acid negative electrode plates after mixing $Pb_xWO_3$ (15 wt%), where x = 1;

Figure 16. Photographs of lead- and tin- doped tungsten oxide (a is $Pb_xWO_3$, b is $Sn_xWO_3$) powder, where x = 1;

Figure 17. Linear sweep voltammetric curves of Pb-doped tungsten oxide ($PbWO_3$) and $WO_3$ electrodes.

**The contents of the invention**

The advantages of the present invention are further illustrated by the following specific examples, but the scope of the present invention is not limited to the following examples.

The reagents and raw materials used in the present invention are commercially available.

<u>Example 1:</u> Preparation of lead-doped tungsten oxide.

The preparation method comprises the following steps:

1) a tungsten-containing precursor material, in which sodium tungstate is dissolved in water, and an appropriate amount of ammonium sulfate is added to form a uniform 1wt% solution of sodium tungstate; acidification is carried out by adding 2wt% of sulfuric acid to form an intermediate;

2) Heating the reaction solution, so that the intermediate dehydrates and precipitates to form the product. Tungsten oxide ($WO_3$) is obtained after filtration, drying and sintering;

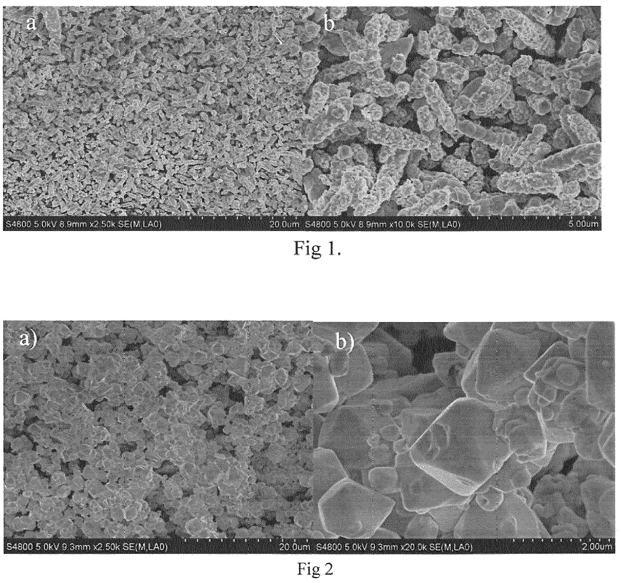

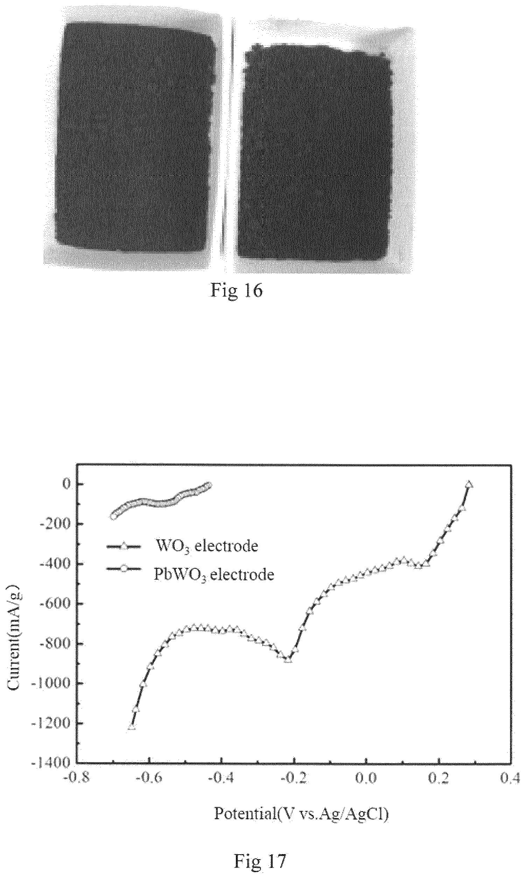

3) The oxide product obtained above is mixed with the dopant element precursor (lead powder in this example) at a different molar ratio (see **Table 1** below for specific products) in water to form a homogeneous slurry which is dried at 100 ° C and then subjected to sintering furnace at a temperature of 500-700 ° C in $N_2$ or a forming gas ($N_2/H_2$) for 5 hours to obtain an oxide. The typical morphology is shown in Fig. 16a, which suggests that the obtained oxide is in the form of powder. And the product $Pb_xWO_3$ is finally formed after sintering in muffle furnace at 300 degrees Celsius for 1-20 hours. The typical morphology of the product is shown in Figure 1, and the particle size is below 50$\mu$m.

**Table 1** Mole ratio between doping elements and W, and the final product structures

|  | Dopant precursor | Mole ratio between doping elements and W | Final product structure |
|---|---|---|---|
| Product 1 | Lead powder | 0.15:1 | $Pb_{0.15}WO_3$ |
| Product 2 | Lead powder | 0.3:1 | $Pb_{0.3}WO_3$ |
| Product 3 | Lead powder | 0.6:1 | $Pb_{0.6}WO_3$ |
| Product 4 | Lead powder | 0.5:1 | $Pb_{0.5}WO_3$ |
| Product 5 | Lead powder | 1:1 | $PbWO_3$ |

<u>Example 2:</u> Preparation of Tin-doped tungsten oxide.

Using the preparation method of Example 1, the oxide product obtained as described above was mixed with the dopant element precursor, and in the present example, tin powder is blended with oxide powder at a molar ratio of 1: 1 in water. The mixture is stirred at a temperature of 100 ° C until it is dried and then is passed through an atmosphere sintering furnace at 500-700 ° C under nitrogen or a forming gas ($N_2/H_2$) for 5 hours to produce an intermediate doped oxide. The typical morphology is given in Figure 16b which shows that the obtained oxide is a powder. And the product $Sn_xWO_3$ is finally formed after sintering in muffle furnace at 300 degrees Celsius for 1-20 hours. The typical morphology of the product $SnWO_3$ shown in Figure 2, and the particle size is about 5 $\mu$m long and the diameter is about 800nm ~ 1$\mu$m.

The properties of the tungsten oxide obtained by Examples 1 and 2 will be described below with reference to the accompanying drawings.

**Figure 1** shows electron micrographs at different magnifications for tin-doped tungsten oxide ($SnWO_3$) prepared in Example 2. As shown in Fig. 1, it is found that the tin-doped tungsten oxide has a uniform rod-like structure, and the rod-like length is less than about 5 $\mu$m, and the diameter is about 800nm ~ 1$\mu$m.

**Figure 2** shows electron micrographs at different magnifications for lead-doped tungsten oxide ($PbWO_3$) prepared in Example 1, and the molar ratio of lead powder to tungsten oxide is 0.5: 1. It can be seen from Figure 2, lead tungsten oxide has a uniform morphology, the structure is octahedral, the size of particles less than 2$\mu$m.

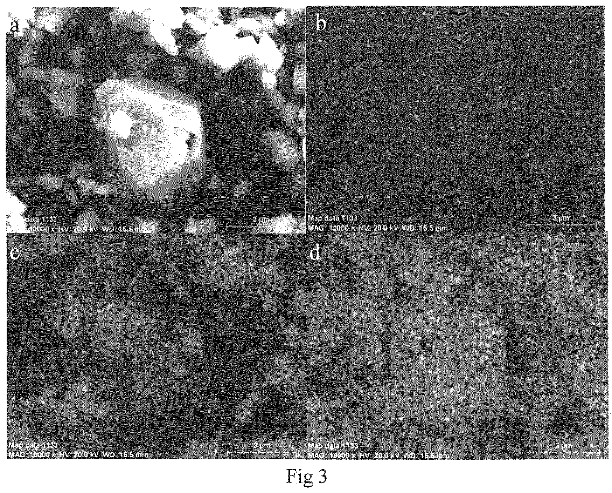

**Figure 3** shows the Energy Dispersive Spectroscopy (EDS) mapping of the lead-doped tungsten oxide (PbWO$_3$) prepared in Example 1, and the molar ratio of lead powder to tungsten oxide is 0.5: 1. Figure 3 indicates that the metal element Pb evenly distributed in the tungsten oxide, which contributes to the improvement of oxygen evolution potential.

**Figure 16** shows the powder of lead-doped and tin-doped oxide (PbWO$_3$ and SnWO$_3$) powder, in which the molar ratio of both lead powder to tungsten oxide and tin powder to tungsten oxide is 1: 1. The former powder appears blue black, and the latter powder appears brown.

In order to further investigate the properties of the tungsten oxide obtained in Examples 1 and 2, the performance of the electrodes and plates prepared by the tungsten oxides obtained in Examples 1 and 2 will be further studied by the following Examples 3-5:

**Example 3:** Preparation and Electrochemical Properties Characterization of Tungsten Oxide Electrodes.

The tungsten oxide (A$_x$WO$_3$) or molybdenum oxide (A$_x$MoO$_3$) obtained in Example 1-2 is mixed with a conductive agent, a binder and a dispersion solvent in a specific ratio (mass ratio: 94: 3: 3), wherein the conductive agent, binder and disperse solvent can be selected from common types of conductive agents, binders, and dispersing solvents in the field of electrochemistry. After these components are homogeneously mixed, an electrode slurry (paste) is obtained, applied to the current collector, and dried to form an electrode. The obtained electrode is paired with a lead oxide electrode in a conventional manner, separated by a separator, and an acidic electrolyte is added to form a single cell and subjected to electrochemical test. The results are as follows:

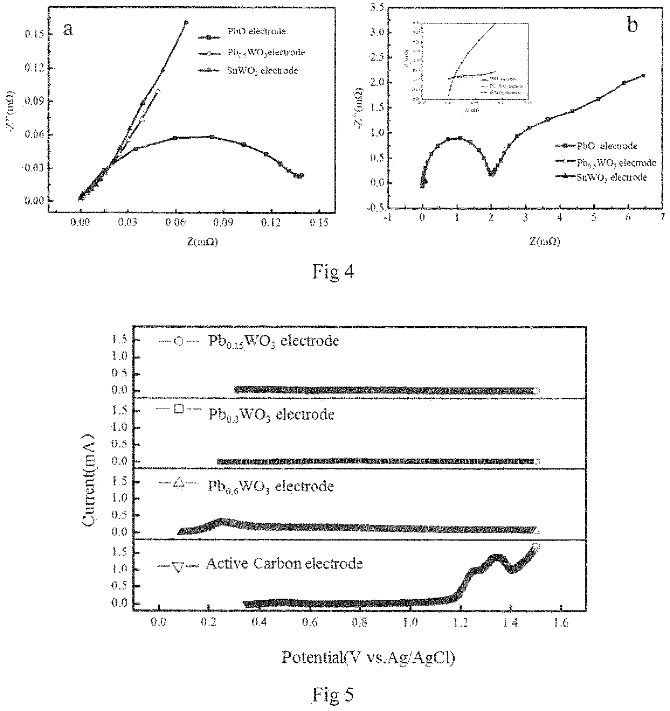

**Figure 4** shows the comparison of AC impedance spectra before and after linear scanning of Pb$_{0.5}$WO$_3$ and SnWO$_3$ electrodes obtained by Example 3 and commercially available PbO electrodes. The test electrolyte of all the electrodes is made of 3M H$_2$SO$_4$ solution. Fig. 4a shows the comparison of the three types of electrode AC impedance spectra in the initial state. From the figure, we can see the resistance characteristics of the two types of metal tungsten oxides - both the diffusion resistance in the low frequency region and charge-transfer resistance at high frequency region are much lower than that of the PbO electrode. Subsequently, three electrodes are subjected to linear sweep scan at a scanning rate of 0.5 mV/s and the voltage range is from open circuit voltage to 2.0 V (vs. Ag/AgCl electrode). Figure 4b shows the comparison of the three kinds of electrodes after scanning to 2.0V. It can be seen that the PbO electrode is first oxidized to PbO$_2$ before the formation of PbSO$_4$ in the sulfuric acid solution. The internal resistance of the high frequency region is much higher than that of the Pb$_{0.5}$WO$_3$ and SnWO$_3$ electrodes (see the inset in Figure 4b), further demonstrating the high conductivity of the metal-doped tungsten oxides at high oxygen evolution potentials.

Figure 5 is a graph showing the linear sweep voltammetry curves of electrodes made with the tungsten oxide doped with different contents of lead [Pb$_x$WO$_3$ (x = 0.15, 0.3 and 0.6)] obtained by the method described in Example 3, and the activated carbon electrode. Wherein the Pb$_x$WO$_3$ (x = 0.15, 0.3 and 0.6) powders are obtained from Example 1; activated charcoal is commercially available and the electrode preparation method of the three materials can be found in Example 3.

The test electrolyte of all the electrodes is made of 3M H$_2$SO$_4$ solution. The three electrodes are subjected to linear sweep voltammetry with a scanning rate of 0.5mV/s and a voltage range is open circuit voltage to 1.5V (vs. Ag/AgCl electrode). From Figure 5, it can be seen that the activated carbon electrode has a significant oxidation peak at 1.3V, indicating that carbon cannot be stable in the operation voltage range of PbO$_2$ cathode, and the voltage windows of Pb$_x$WO$_3$ (x = 0.15, 0.3 and 0.6) electrode and PbO$_2$ cathode match very well, indicating that the doped lead oxide electrode has a high oxygen evolution potential.

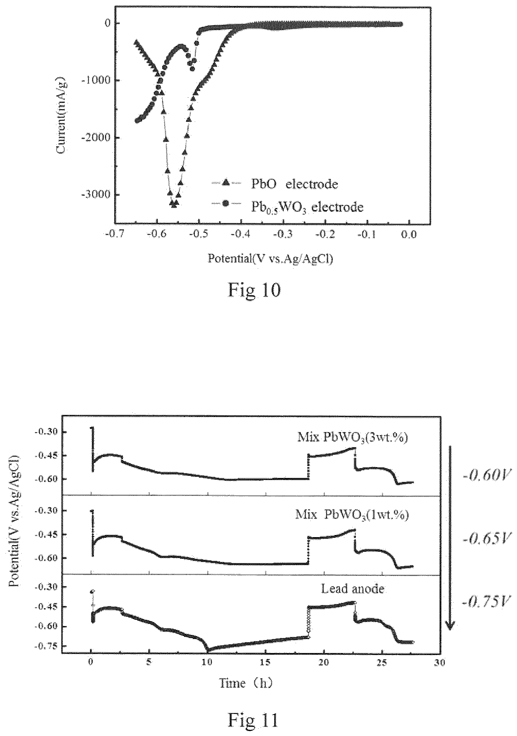

**Figure 10** shows the linear sweep voltammetry curves for the doped lead tungsten oxide (Pb$_{0.5}$WO$_3$) and the PbO electrodes. The preparation method of the Pb$_{0.5}$WO$_3$ powder is shown in Example 1. The molar ratio of lead powder to tungsten oxide is 0.5: 1. The PbO is commercially available. The electrode preparation method of the two materials is described in Example 3, the scanning rate is 0.5 mV/s; the electrolyte is 3M H$_2$SO$_4$ solution. It can be seen from Fig. 10 that the Pb$_{0.5}$WO$_3$ electrode improves the deposition potential of Pb from PbSO$_4$ reduction, indicating its high conductivity.

In order to further demonstrate that the doped lead tungsten oxides disclosed in this application has a particular advantage over pure tungsten oxide, Figure 17 compares the linear sweep voltammetry curves for doped lead tungsten oxide (PbWO$_3$) and WO$_3$ electrodes. Preparation method of PbWO$_3$ powder can be found in Example 1. The molar ratio of lead powder to tungsten oxide is 1: 1. WO$_3$ is prepared according to the preparation method disclosed in the patent WO2015054974A1. The electrode preparation for the two materials is carried out in the same manner as in Example 3. The scanning rate is 0.5 mV/s and the electrolyte is 3M H$_2$SO$_4$ aqueous solution. It can be seen that the WO$_3$ electrode begins to generate hydrogen at -0.55V, and the active material detaches from the surface of the current collector, while the PbWO$_3$ electrode has a higher hydrogen evolution potential: the polarization current density is only 1/6 of that of WO$_3$ electrode at -0.7V. This result fully demonstrates that the potential matching between PbWO$_3$ material and lead-acid battery anode is better than that between WO$_3$ and lead-acid battery anode.

**Example 4:** Preparation of positive electrode plate of lead-acid battery.

The doped tungsten oxide material with was added as an additive to the positive electrode paste at different ratios. The electrode plate is prepared according to the formulation of the positive electrode of the lead acid battery shown in Table 2. The specific parameters for curing and chemical formation are shown in Table 2 and Table 3. Finally, the plate is dried after the formation process. The lead-acid battery is assembled, injected with sulfuric acid electrolyte and sealed using traditional lead-acid battery fabrication process. The battery is tested after setting for 24 hours. The specific results are as follows:

**Table 2** Recipe for lead-acid battery cathode preparation

| Electrode component | Amount |
|---|---|
| Lead powder (75% oxidation) | 100kg |
| Sulfuric acid ($1.4 g l cm^3$) | 5.8L |
| De-ionized water | 12~13L |
| fiber ($1.38 g/cm^3$) | 100g |
| $M_xWO_3$ or $M_xMoO_3$ | (0-20wt% in the final pastes/electrode) |
| Density of lead paste | $4.2 g/cm^3$ |

**Table 3** Curing parameters for lead-acid battery cathodes

|  | Temperature | Humility | Time |
|---|---|---|---|
| 1 | 55°C | >98% | 6h |
| 2 | 60°C | >98% | 6h |
| 3 | 60°C | >95% | 6h |
| 4 | 65°C | >80% | 6h |
| 5 | 70°C | About 50% | 8h |
| 6 | 70°C | About 20% | 5h |
| 7 | 70°C | <2% | 20h |
| Total |  |  | 57h |

**Table 4** Parameters for lead-acid battery cathode formation

|  | Current | Time |
|---|---|---|
| 1 | 0.24C charge | 2.5h |
| 2 | 0.42C charge | 16h |
| 3 | 0.42C discharge | 2h |
| 4 | 0.42C charge | 2h |
| $H_2SO_4$: 1.05 *s.g* | | |

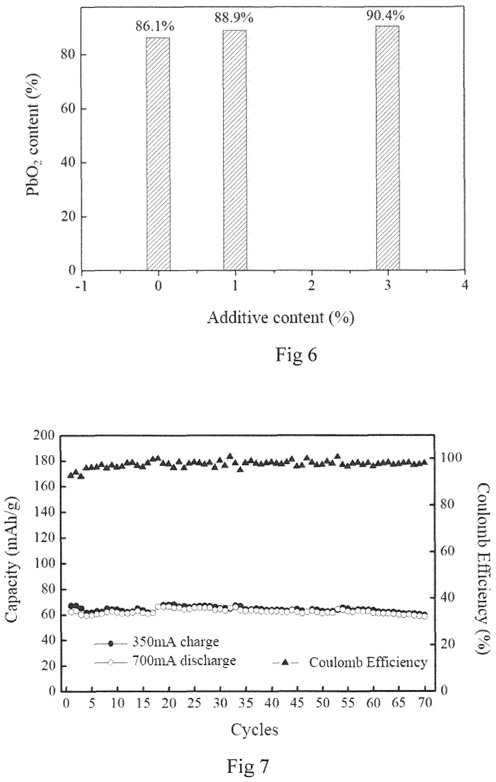

**Figure 6** shows the content of $PbO_2$ in the lead-acid positive electrode before and after mixing with $Pb_{0.5}WO_3$. The $Pb_{0.5}WO_3$ powder was prepared in the same manner as in Example 4 and added by 1% and 3% by weight. Other lead-acid positive and negative for control experiment are commercially available. The test plates are assembled in accordance with 2 positive plates to 1 negative plate. 1. The AGM separator has a thickness of 0.7mm (100kPa); the electrolyte density of 1.05s.g. sulfuric acid. The whole formation procedure is refereed to lead-acid battery positive formation parameters listed in Table 4.
Specific method for testing $PbO_2$ content is as follows: reagents are selected from 1 % $H_2O_2$, 50% $HNO_3$ and

0.1 N (standard solution) KMnO$_4$. Analysis steps include drying samples, weigh 0.15 ~ 0.2g (accurate to 0.2mg) of powder and place them in 250ml Erlenmeyer flask. Then add 10ml of HNO$_3$ (1: 1) with pipetting followed by adding 5ml of H$_2$O$_2$ (1%). After well mixing, the sample is dissolved, and then subject to immediately titration until the pink disappears with standard a KMnO$_4$ solution. In another 250ml Erlenmeyer flask, add the same solution to perform a blank/control test. And then the content of lead dioxide is calculated according to the following formula:

$$PbO_2\% = \frac{(V1-V2) \times N \times 119.6}{m \times 1000} \times 100$$

N --------- concentrion of KMnO$_4$ standard solution

V1 -------- volume (mL) of standard KMnO$_4$ solution consumed

V2 -------- volume (mL) of standard KMnO$_4$ solution consumed for blank/control sample

m ---------weight of the sample (g)

The results show that the content of PbO$_2$ increases with the increase of the proportion of the additive. When the content is 3%, the content of PbO$_2$ is more than 90%, which is 4.3% higher than that of the ordinary lead-acid battery. This indicates that the high conductivity of lead doped tungsten is beneficial to improve the utilization of active substances of PbO$_2$.

**Figure 7** shows the cycling life, charge-discharge current and Coulomb efficiency curves for the lead-acid cathode with 3 wt.% of mixed Pb$_{0.5}$WO$_3$.

Preparation method of Pb$_{0.5}$WO$_3$ powder can be found in Example 1. The molar ratio of lead powder to tungsten oxide is 0.5: 1. The Pb$_{0.5}$WO$_3$ powder is prepared in the same manner as in Example 4 with 3 wt% weight ratio. All the other desired lead-acid positive and negative electrodes for control experiment are commercially available. The test plates are assembled in accordance with 2 positive plates to 1 negative plate. 1. The AGM separator has a thickness of 0.7mm (100kPa); the electrolyte density of 1.05s.g. sulfuric acid. The entire formation process can be seen in Table 4. After the formation, the plate testing is performed in the electrolyte with a density of 1.28sg sulfuric acid. The whole test procedure is the following: constant voltage charge to a current of 350mA, and 700mA constant current discharge. The capacity retention rate of the entire electrode within 70 cycles is as high as 98% and Coulomb efficiency close to 100%. These results fully embodies that Pb$_{0.5}$WO$_3$ as a negative electrode additive of lead-acid battery can improve the structure stability of the negative electrodes, so that the electrode structure does not deteriorate for a long time, and the cycle life is improved.

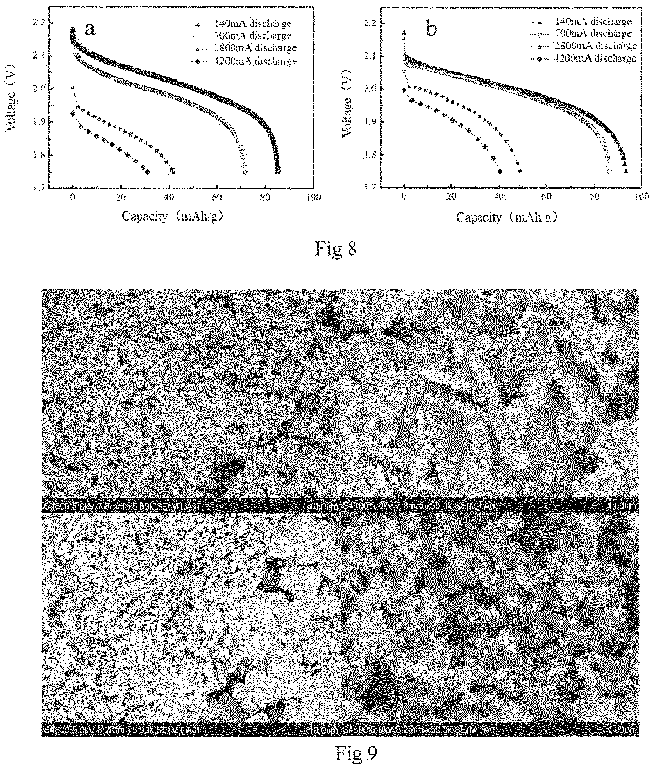

**Figure 8** shows the rate capability of lead-acid positive electrodes before and after mixing with Pb$_{0.5}$WO$_3$ at different discharge current rates. The specific parameters can also refer to the following Table 8. Preparation method of Pb$_{0.5}$WO$_3$ powder can be found in Example 1; the molar ratio of lead powder to tungsten oxide is 0.5: 1. PbWO$_3$ powder is prepared in the same manner as in Example 4, and is added to the lead-acid battery positive electrode with a ratio of 3wt%. All the other desired lead-acid positive and negative electrodes for control experiment are commercially available. The test plates are assembled in accordance with 2 positive plates to 1 negative plate. 1. The AGM separator has a thickness of 0.7mm (100kPa); the electrolyte density of 1.05s.g. sulfuric acid.; the entire formation process can be seen in Table 4. After the formation, the plate testing is performed in the electrolyte with a density of 1.28sg sulfuric acid. The whole test procedure is the following: constant voltage charge to a current at 350mA; followed by constant current discharge at a current of 140, 700, 2800 or 4200mA. The experimental results show that the high conductivity of Pb$_{0.5}$WO$_3$ additive can improve the charge uptake capability of traditional lead-acid battery positive electrodes, thus can effectively suppress the cathode sulfation.

**Figure 9** shows the cross-sectional scanning electron microscopic images of the lead-acid positive electrode plate before and after the mixing with Pb$_{0.5}$WO$_3$. The preparation method of the Pb$_{0.5}$WO$_3$ powder is described in Example 1. The molar ratio of lead powder to tungsten oxide is 0.5: 1. Pb$_{0.5}$WO$_3$ powder accounted for a weight percentage of 3% in positive electrode plate of a lead-acid battery, which is prepared in the same manner as in Example 4. All the other desired lead-acid positive and negative electrodes for control experiment are commercially available.. The test plates are assembled in accordance with 2 positive plates to 1 negative plate. 1. The AGM separator has a thickness of 0.7mm (100kPa); the electrolyte density of 1.05s.g. sulfuric acid.; the entire formation process can be seen in Table 4. After the formation, the plate testing is performed in the electrolyte with a density of 1.28sg sulfuric acid. The whole test procedure is the following: constant voltage charge to a current at 350mA; followed by constant current discharge at a current of 700mA, repeated for 10 cycles. Then the electrode is scanned at almost zero discharge state. Figure 9 a and b shows cross-sectional scanning electron microscope images of lead-acid positive electrodes at different magnifications. It can be found that large $PbSO_4$ particles are formed, hindering the electrolyte diffusion towards the inside of the electrode material. Figure 9c and d shows cross-sectional scanning electron microscope images at different magnifications for lead-acid positive electrodes added with $Pb_{0.5}WO_3$. It can be found that due to the existence of the conductive oxide additive, the particles size of formed $PbSO_4$ is small, which can increase the reversibility of redox reaction. This result indicates that $Pb_{0.5}WO_3$ can be used as the positive additive of lead acid battery to suppress the sulfation of positive electrode and improve the stability of electrode structure.

**Example 5:** Preparation of negative electrode plate of lead acid battery.

The conductive bronze oxide material formed by metal doping is added as an additive to make the negative electrode paste in different proportions. The plate is fabricated according to the standard formulation of negative electrode of the lead-acid batteries used in the electric bicycle (see Table: 5). The specific parameters for curing and formation can be found in Table 5 and Table 6. Finally, the plate is dried after the formation process. The lead-acid battery is assembled, injected with sulfuric acid electrolyte and sealed using traditional lead-acid battery fabrication process. The battery is tested after setting for 24 hours. The specific results are as follows:

Table 5. Recipe for lead-acid battery anode preparation

| Electrode component | Amount |
|---|---|
| Lead powder (75% oxidation) | 100kg |
| $H_2SO_4$ ( 1.4g/cm$^3$ ) | 5.5L |
| De-ionized water | 12~13L |
| fiber (1.38g/cm$^3$) | 80g |
| BaSO4 (0.6)$\mu$m, 4.4g/cm$^3$) | 1.2kg |
| Lignin (0.65g/cm$^3$) | 0.22kg |
| MxWO$_3$ or M$_x$MoO$_3$ | 0-20wt% in the final pastes/electrode |
| Lead electrode density | 4.35g/cm$^3$ |

Table 6. Curing parameters for lead-acid battery anodes

|  | Temperature | Humility | Time |
|---|---|---|---|
| 1 | 48°C | >98% | 48h |
| 2 | 70°C | <2% | 5h |
| Total |  |  | 53h |

Table 7. Parameters for lead-acid battery anode formation

|  |  | Current | Time |
|---|---|---|---|
|  | 1 | 0.2A charge | 2.5h |
|  | 2 | 0.35A charge | 16h |
|  | 3 | 0.3A discharge | 4h |
|  | 4 | 0.35C charge | 5h |
| $H_2SO_4$: 1.05 *s.g* |  |  |  |

**Table 8.** Specific capacity of lead-acid cathode and cathode mixed with 1wt% of $Pb_{0.5}WO_3$ at different discharge rate.

| Discharge rate | Lead-acid cathode | Cathode with 1wt% of $Pb_{0.5}WO_3$ |
|---|---|---|
| 0.1C(~140mA) | 85.4mAh/g | 93.4mAh/g |
| 0.5C(~700mA) | 71.7mAh/g | 86.1mAh/g |
| 2C(~2.8A) | 41.7mAh/g | 50.0mAh/g |
| 3C(~4.2A) | 31.0mAh/g | 40.6mAh/g |

**Table 9** Initial discharge capacity of lead-acid anodes mixed with different amount of $PbWO_3$

| Sample | Lead acid anode | Anode mixed with 1wt% of $PbWO_3$ | Anode mixed with 3% of $PbWO_3$ |
|---|---|---|---|
| Initial discharge capacity (mAh/g) | 45.7 | 52.3 | 67.7 |
| Anode active mass utilization efficiency (%) | 17.6 | 20.2 | 26.1 |

**Figure 11** compares the formation curves of lead-acid negative electrode plates with different contents of $PbWO_3$ additives. The preparation method of $PbWO_3$ powder is described in Example 1, and the molar ratio of lead powder to tungsten oxide is 1: 1. The lead-acid battery negative electrode plates with additives are prepared in the same manner as in Example 5 by adding $PbWO_3$ powder at a weight percentage of 1% and 3%. All the other desired lead-acid positive and negative electrodes for control experiment are commercially available. The test plates are assembled in accordance with 2 positive plates to 1 negative plate. 1. The AGM separator has a thickness of 0.7mm (100kPa); the electrolyte density of 1.05s.g. sulfuric acid; the entire formation process can be seen in Table 7. After the formation, the plate testing is performed in the electrolyte with a density of 1.28sg sulfuric acid. The experimental results show that the introduction of $PbWO_3$ additive greatly reduces electrode potential of the traditional lead-acid battery anode. And its discharge voltage is slightly higher than that of the lead-acid battery, which indicates that the formation efficiency of the negative electrode plate is effectively improved.

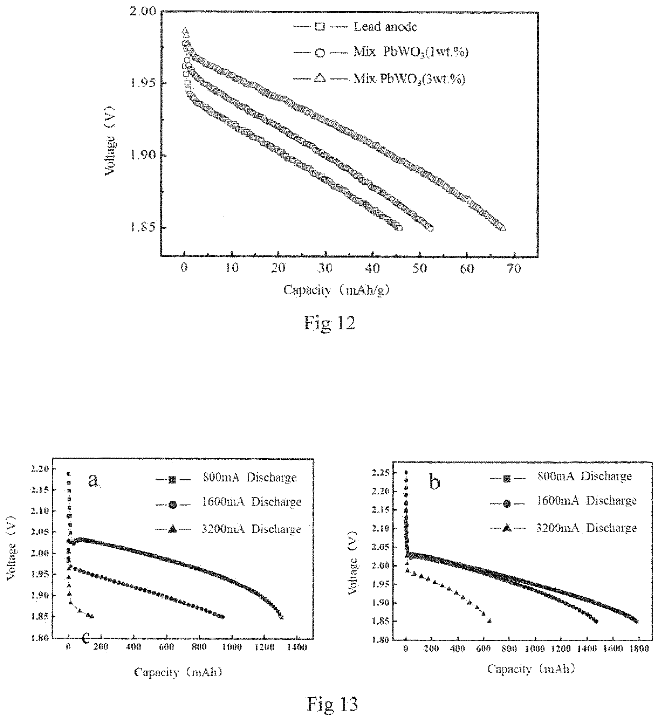

**Figure 12** shows the initial discharge capacity of the lead-acid negative electrode plates with different contents of $PbWO_3$ at 1C rate. The results can be found in Table 9. The formula used to calculate the utilization efficiency of active materials in Table 9 is the following: Active Materials Utilization (%) = Theoretical capacity of the electrode discharge capacity * 100 / theoretical capacity of Pb, where the theoretical capacity of Pb is 259 mAh/g. Preparation method of $PbWO_3$ powder can be found in Example 1. The molar ratio of lead powder to tungsten oxide is 1: 1. The lead-acid battery negative electrode plates with additives are prepared in the same manner as in Example 5 by adding $PbWO_3$ powder at a weight percentage of 1% and 3%. All the other desired lead-acid positive and negative electrodes for control experiment are commercially available. The test plates are assembled in accordance with 2 positive plates to 1 negative plate. 1. The AGM separator has a thickness of 0.7mm (100kPa); the electrolyte density of 1.05s.g. sulfuric acid; the entire formation process can be seen in Table 7. After the formation, the plate testing is performed in the electrolyte with a density of 1.28 s.g. sulfuric acid. The initial discharge capacity is performed at current of 1.6A after the formation process. The experimental results show that the introduction of $PbWO_3$ additive greatly improved the anode capacity (~ 1.5 times) of traditional lead-acid battery. The anode discharge voltage and voltage drop are also lower than that of the traditional lead-acid battery, which suggests its high conductivity.

**Figure 13** shows the rate performance of the lead-acid negative electrode plates mixed with different contents of $PbWO_3$. Preparation method of $PbWO_3$ powder can be found in Example 1. The molar ratio of lead powder to tungsten oxide is 1: 1. The lead-acid battery negative electrode plates with additives are prepared in the same manner as in Example 5 by adding $PbWO_3$ powder at a weight percentage of 1% and 3%. All the other desired lead-acid positive and negative electrodes for control experiment are commercially available. The test plates are assembled in accordance with 2 positive plates to 1 negative plate. 1. The AGM separator has a thickness of 0.7mm (100kPa); the electrolyte density of 1.05s.g. sulfuric acid; the entire formation process can be seen in Table 7. After the formation, the plate testing is performed in the electrolyte with a density of 1.28 s.g. sulfuric acid. The whole test procedure is the following: constant voltage charge to a current at 400mA; followed by constant current discharge at a current of 800, 1600, or 3200mA. The experimental results show that the high conductivity of $PbWO_3$ additive can improve the charge uptake capability of traditional lead-acid battery negative electrodes, thus can effectively suppress the anode sulfation.

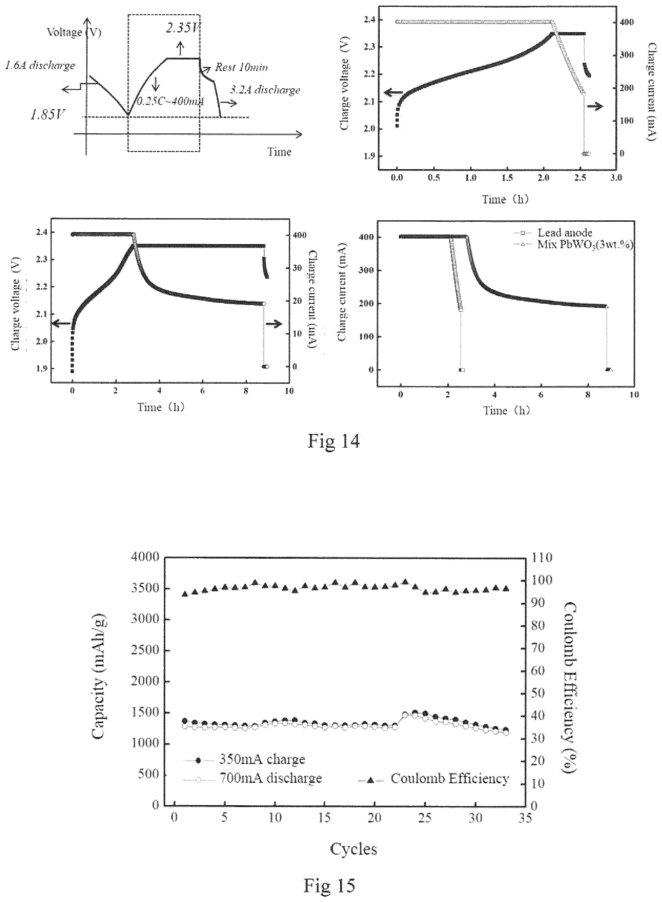

**Figure 14** shows the current and voltage curves (versus time) of the lead-acid negative electrode before and after mixing with 3 wt.% of $PbWO_3$. Preparation method of $PbWO_3$ powder can be found in Example 1. The molar ratio of lead powder to tungsten oxide is 1: 1. The lead-acid battery negative electrode plates with additives are prepared in the same manner as in Example 5 by adding $PbWO_3$ powder at a weight percentage of 1% and 3%. All the other desired lead-acid positive and negative electrodes for control experiment are commercially available. The test plates are assembled in accordance with 2 positive plates to 1 negative plate. 1. The AGM separator has a thickness of 0.7mm (100kPa); the electrolyte density of 1.05s.g. sulfuric acid; the entire formation process can be seen in Table 7. After the formation, the plate testing is performed in the electrolyte with a density of 1.28 s.g. sulfuric acid. Figure 14 a) shows the entire test procedure: 1C rate (~ 1.6A) discharge to 1.85V, then 0.25C rate (400mA) charge to 2.35V with a current limit 200mA, and finally discharge at 2C rate (~ 3.2A). Figure 14 b) and c) shows the current and voltage curves (versus time) of the lead-acid negative electrode before and after mixing with 3 wt.% of $PbWO_3$. Figure 14 d) further compares the time-dependent recharged current curves of the lead-acid negative electrode before and after mixing with 3 wt.% of $PbWO_3$. It can be seen that after discharge at high current, the surface of lead-acid electrode active material is covered with dense insulating lead sulfate, resulting in increased internal resistance and difficult recharge. By comparison, due to the high conductivity, lead-acid anodes with the addition of 3wt.% of $PbWO_3$ still form porous lead sulfate with small grains to facilitate the diffusion of electrolyte into the plate, even at high current discharge. The charge uptake capability is high and it effectively improves the discharge rate performance.

**Figure 15** shows the cycling life, charge/discharge current (versus time) and Coulombic efficiency curves of the lead-acid negative electrode before and after mixing with 15 wt.% of $PbWO_3$. Preparation method of $PbWO_3$ powder can be found in Example 1. The molar ratio of lead powder to tungsten oxide is 1 : 1. The lead-acid battery negative electrode plates with additives are prepared in the same manner as in Example 5 by adding $PbWO_3$ powder at a weight percentage of 1% and 3%. All the other desired lead-acid positive and negative electrodes for control experiment are commercially available. The test plates are assembled in accordance with 2 positive plates to 1 negative plate. 1. The AGM separator has a thickness of 0.7mm (100kPa); the electrolyte density of 1.05s.g. sulfuric acid; the entire formation process can be seen in Table 7. After the formation, the plate testing is performed in the electrolyte with a density of 1.28 s.g. sulfuric acid. The whole test procedure is the following: constant voltage charge to a current at 350mA followed by constant current discharge at a current of 700mA. The capacity retention is 97% for 35 charge/discharge cycles and the Coulombic efficiency reaches 100%, indicating that the $PbWO_3$ additive can improve the structure stability of lead-acid negative electrodes and enhance their cycling lifetime.

While specific embodiments of the present invention have been described in detail above, it is by way of example only and the invention is not limited to the specific embodiments described above. It will be apparent to those skilled in the art that any equivalent modifications and substitutions to the present invention are within the scope of the present invention. Accordingly, equivalents and modifications not departing from the spirit and scope of the invention are intended to be included within the scope of the invention.

## Claims

1. An electrode plate for an electrochemical energy storage device comprising an acidic electrolyte, the said electrode plate comprising one or more of the following oxides:

    Tungsten oxide doped with A element ($A_xWO_3$), and molybdenum oxide doped with A element ($A_xMoO_3$), wherein The dopant element A may be any one or more of the following:

    Lithium, sodium, potassium, beryllium, magnesium, calcium, scandium, titanium, vanadium, chromium, manganese, iron, cobalt, nickel, copper, zinc, gallium, germanium, arsenic, rubidium, cesium, yttrium, zirconium, strontium, niobium, molybdenum, tritium, rhenium, iridium, platinum, gold, mercury, mound, lead, bismuth.
    And wherein the range of x values (mole percent) is 0.15 to 1, preferably in the range of 0.5 to 1.

2. The said electrode plate according to claim 1, wherein the oxide is in the form of powder, the particle size of the powder is 50 $\mu$m or less, more preferably the particle size is 20 $\mu$m or less, and most preferably at 5 $\mu$m or less.

3. The said electrode plate of claim 1, wherein the content of the oxide in the plate is 0-20 wt%.

4. The said electrode plate of claim 1, wherein the positive plate further comprises lead dioxide when the plate is a positive plate, and when the plate is a negative plate, the negative plate further comprises lead.

5. The said electrode plate of claim 4, wherein the oxide forms a mixture with the lead or lead oxide to form a paste-type electrode; or the oxide is separately added with the lead or lead oxide into the paste to prepare paste-type electrodes.

6. An electrochemical energy storage device cell comprising an acidic electrolyte, wherein the positive electrode and/or the negative electrode are selected from the electrode plates described in any of the above claims.

7. The said electrochemical energy storage device according to claim 6, wherein the acidic electrolytic solution is sulfuric acid, nitric acid, hydrochloric acid, phosphoric acid, acetic acid or oxalic acid solution.

8. The said electrochemical energy storage device according to claim 6, wherein said acidic electrolyte contains A doped tungsten oxide ($A_xWO_3$) and/or A doped molybdenum oxide ($A_xMoO_3$), wherein the dopant element A may be any one or more of the following:

   Lithium, sodium, potassium, beryllium, magnesium, calcium, scandium, titanium, vanadium, chromium, manganese, iron, cobalt, nickel, copper, zinc, gallium, germanium, arsenic, rubidium, cesium, yttrium, zirconium, strontium, niobium, molybdenum, tritium, rhenium, iridium, platinum, gold, mercury, mound, lead, bismuth. And wherein the range of x values (mole percent) is 0.15 to 1, preferably in the range of 0.5 to 1.

9. A paste suitable for use in the preparation of electrodes for electrochemical energy storage devices comprising one or more of the following oxides:
   A doped tungsten oxide ($A_xWO_3$) and/or A doped molybdenum oxide ($A_xMoO_3$), wherein the dopant element A may be any one or more of the following:

   Lithium, sodium, potassium, beryllium, magnesium, calcium, scandium, titanium, vanadium, chromium, manganese, iron, cobalt, nickel, copper, zinc, gallium, germanium, arsenic, rubidium, cesium, yttrium, zirconium, strontium, niobium, molybdenum, tritium, rhenium, iridium, platinum, gold, mercury, mound, lead, bismuth. And wherein the range of x values (mole percent) is 0.15 to 1, preferably in the range of 0.5 to 1.

10. The said paste of claim 9, wherein the composition of the oxide in the paste is in the range of 0 to 20 wt%.

11. The said paste according to claim 9, wherein the oxide is in the form of powder, the powder has a particle size of 50 $\mu$m or less, more preferably with a particle size of 20 $\mu$m or less, and most preferably with a particle size of 10 $\mu$m or less.

12. Application of an oxide in reducing the internal resistance of electrode in electrochemical energy storage device, the said oxide is tungsten oxide doped with A element ($A_xWO_3$), and molybdenum oxide doped with A element ($A_xMoO_3$), wherein
    The dopant element A may be any one or more of the following:

    Lithium, sodium, potassium, beryllium, magnesium, calcium, scandium, titanium, vanadium, chromium, manganese, iron, cobalt, nickel, copper, zinc, gallium, germanium, arsenic, rubidium, cesium, yttrium, zirconium, strontium, niobium, molybdenum, tritium, rhenium, iridium, platinum, gold, mercury, mound, lead, bismuth. And wherein the range of x values (mole percent) is 0.15 to 1, preferably in the range of 0.5 to 1.

Fig 1.

Fig 2

Fig 3

Fig 4

Fig 5

Fig 6

Fig 7

Fig 8

Fig 9

Fig 10

Fig 11

Fig 12

Fig 13

Fig 14

Fig 15

Fig 16

Fig 17

# INTERNATIONAL SEARCH REPORT

| International application No. |
| --- |
| **PCT/CN2015/082830** |

### A. CLASSIFICATION OF SUBJECT MATTER

H01M 4/48 (2010.01) i

According to International Patent Classification (IPC) or to both national classification and IPC

### B. FIELDS SEARCHED

Minimum documentation searched (classification system followed by classification symbols)

H01M4/

Documentation searched other than minimum documentation to the extent that such documents are included in the fields searched

Electronic data base consulted during the international search (name of data base and, where practicable, search terms used)

EPODOC; WPI; CNPAT; CNKI; CA: electrode, tungsten oxide, molybdenum oxide, battery, cell, tungsten,

monoclini, ?xwo3, ?xmoo3

### C. DOCUMENTS CONSIDERED TO BE RELEVANT

| Category* | Citation of document, with indication, where appropriate, of the relevant passages | Relevant to claim No. |
| --- | --- | --- |
| Y | WO 2015054974 A1 (SUZHOU HANS ENERGY STORAGE TECHNOLOGY CO., LTD.), 23 April 2015 (23.04.2015), description, contents of the invention, embodiments 1-14 | 1-12 |
| Y | CN 104521046 A (BLACKLIGHT POWER INC.), 15 April 2015 (15.04.2015), description, paragraph 467 | 1-12 |
| A | CN 101641292 A (TOSHIBA CORPORATION et al.), 03 February 2010 (01.02.20103), claim 1 | 1-12 |
| A | CN 103000390 A (SHANGHAI AOWEI TECHNOLOGY DEVELOPMENT CO., LTD.), 27 March 2013 (27.03.2013), claim 1 | 1-12 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 26 February 2016 (26.02.2016) | **16 March 2016 (16.03.2016)** |
| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHAO, Huaying** Telephone No.: (86-10) **61648531** |

Form PCT/ISA/210 (second sheet) (July 2009)

## INTERNATIONAL SEARCH REPORT
### Information on patent family members

| | International application No. |
|---|---|
| | **PCT/CN2015/082830** |

| Patent Documents referred in the Report | Publication Date | Patent Family | Publication Date |
|---|---|---|---|
| WO 2015054974 A1 | 19 May 2014 | None | |
| CN 104521046 A | 15 April 2015 | SG 11201407689 A1 | 30 December 2014 |
| | | MX 2014014084 A | 10 April 2015 |
| | | WO 2014025443 A2 | 13 February 2014 |
| | | CA 2873873 A1 | 13 February 2014 |
| | | KR 20150028775 A | 16 March 2015 |
| | | US 2015171455 A1 | 18 June 2015 |
| | | JP 2015528979 A | 01 October 2015 |
| | | AU 2013300150 A1 | 04 December 2014 |
| | | TW 201407874 A | 16 February 2014 |
| | | EP 2852995 A2 | 01 April 2015 |
| | | WO 2014025443 A3 | 03 April 2014 |
| CN 101641292 A | 03 February 2010 | US 8003563 B2 | 23 August 2011 |
| | | JPWO 2008117655 S | 15 July 2010 |
| | | TW I391329 B | 01 April 2013 |
| | | TW 200906730 A | 16 February 2009 |
| | | WO 2008117655 A1 | 02 October 2008 |
| | | JP 5306181 B2 | 02 October 2013 |
| | | US 2010113254 A1 | 06 May 2010 |
| | | CN 101641292 B | 17 October 2012 |
| CN 103000390 A | 27 March 2013 | CN 103000390 B | 20 January 2016 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101563741 B
- US 7998616 B2
- CN 200910183503
- KR 1020060084441 A
- WO 2015054974 A1
- US 5302476 A

**Non-patent literature cited in the description**

- **L. ZERROUAL et al.** *J. Power Sources,* 2015, vol. 279, 146-150
- **K.R. BULLOCK.** *J. Power Source,* 1994, vol. 51, 1
- **J. L. WEININGER et al.** *J. Electrochem. Soc.,* 1975, vol. 122, 1161